# EUROPEAN PATENT APPLICATION

(11) **EP 4 387 083 A1**
(43) Date of publication of application: **19.06.2024**
(21) Application number: 22898489.4
(22) Date of filing: 16.11.2022
(51) Int. Cl.: H02P 27/08, H02P 21/06

(54) **MOTOR DEVICE**

(30) Priority: 24.11.2021 JP 2021189865
(71) Applicant: IHI Corporation, Tokyo 135-8710 (JP)
(72) Inventor: KATSURA, Kenshiro, Tokyo 135-8710 (JP); JIKUMARU, Takehiro, Tokyo 135-8710 (JP); YAMAGUCHI, Koji, Tokyo 135-8710 (JP); YAMADA, Tatsuro, Tokyo 135-8710 (JP)
(74) Representative: TBK
(86) International application number: PCT/JP2022/042626
(87) International publication number: WO 2023/095705

(57) **Abstract**

A motor device includes: an electric motor driven by AC drive electric power; an inverter that supplies the drive electric power to the electric motor; and a controller that generates a pulse signal for controlling the drive electric power using a first command signal indicating a target of the drive electric power and a carrier. The controller includes a carrier frequency setting unit that sets a carrier frequency of the carrier using a second command signal indicating the target of the drive electric power. The carrier frequency setting unit sets a carrier frequency in a section corresponding to a first phase range in one period of the second command signal to be lower than a carrier frequency in a section corresponding to a second phase range other than the first phase range.

## Description

### Technical Field

The present disclosure relates to a motor device.

### Background Art

Patent Literatures 1 to 4 disclose techniques related to a motor device. For example, Patent Literature 1 discloses a motor device including an electric motor and an inverter that drives the electric motor using a plurality of circuit blocks. In this motor device, each circuit block is controlled by a pulse width modulation (PWM) method. In the PWM control, a control signal to each circuit block is generated by comparison between a predetermined voltage command and a carrier. An AC current for driving the motor is output from the inverter by driving each circuit block according to the control signal. An electric current ripple component that increases a motor loss is superimposed on the AC current output from the inverter. In order to suppress an increase in the electric current ripple component (i.e., to suppress an increase in motor loss), it is effective to set a carrier frequency of the carrier to be high.

### Citation List

### Patent Literature

Patent Literature 1: Japanese Unexamined Patent Publication No. 2016-197933
Patent Literature 2: Japanese Unexamined Patent Publication No. 2016-220325
Patent Literature 3: Japanese Unexamined Patent Publication No. 2008-271617
Patent Literature 4: Japanese Unexamined Patent Publication No. 2014-072935

### Summary of Invention

### Technical Problem

However, when the carrier frequency is set to be high, the number of switching operations of the circuit block increases, and therefore a switching loss increases, and an inverter loss thereby increases. When the inverter loss increases, a problem such as a decrease in output efficiency of the motor may occur.

The present disclosure describes a motor device capable of reducing an inverter loss.

### Solution to Problem

A motor device according to an embodiment of the present disclosure includes: an electric motor driven by AC drive electric power; an inverter that supplies the drive electric power to the electric motor; and a controller that generates a pulse signal for controlling the drive electric power using a first command signal indicating a target of the drive electric power and a carrier. The controller includes a carrier frequency setting unit that sets a carrier frequency of the carrier using a second command signal indicating the target of the drive electric power. The carrier frequency setting unit sets a carrier frequency in a section corresponding to a first phase range in one period of the second command signal to be lower than a carrier frequency in a section corresponding to a second phase range other than the first phase range.

### Effects of Invention

According to some aspects of the present disclosure, a motor device capable of reducing an inverter loss is provided.

### Brief Description of Drawings

FIG. 1 is a configuration diagram illustrating an example of a motor device according to an embodiment.
FIG. 2 is a block diagram illustrating an example of a functional configuration of a controller illustrated in FIG. 1.
FIG. 3 is a block diagram illustrating an example of a functional configuration of a PWM controller illustrated in FIG. 2.
FIG. 4 is a diagram for describing an example of setting of a carrier frequency by a carrier frequency setting unit.
FIG. 5 is a diagram for describing another example of the setting of the carrier frequency by the carrier frequency setting unit.
FIG. 6 is a diagram for describing still another example of the setting of the carrier frequency by the carrier frequency setting unit.
FIG. 7 is a configuration diagram illustrating a modification of the motor device.

### Description of Embodiments

A motor device according to an embodiment of the present disclosure includes: an electric motor driven by AC drive electric power; an inverter that supplies the drive electric power to the electric motor; and a controller that generates a pulse signal for controlling the drive electric power using a first command signal indicating a target of the drive electric power and a carrier. The controller includes a carrier frequency setting unit that sets a carrier frequency of the carrier using a second command signal indicating the target of the drive electric power. The carrier frequency setting unit sets a carrier frequency in a section corresponding to a first phase range in one period of the second command signal to be lower than a carrier frequency in a section corresponding to a second phase range other than the first phase range.

In this motor device, the inverter is driven according to the pulse signal, drive electric power is thereby supplied from the inverter to the electric motor, and the electric motor is driven by the drive electric power. An inverter loss generated in the inverter tends to decrease as the carrier frequency of the carrier used for the pulse signal decreases. Therefore, in the motor device, the carrier frequency of the carrier in the section corresponding to the first phase range in one period of the second command signal is set to be lower than the carrier frequency of the carrier in the section corresponding to the second phase range other than the first phase range. That is, a high carrier frequency is not set in the entire section of one period of the second command signal, and a low carrier frequency is set only in a partial section of one period of the second command signal. This makes it possible to reduce an inverter loss in one period of the second command signal.

In some examples, the first phase range may be a phase range not including a zero cross point at which positive and negative of the second command signal are inverted in one period of the second command signal. In this case, the carrier frequency of the carrier is set to be lower in the section corresponding to the first phase range not including the zero cross point in one period of the second command signal than that in the section corresponding to the second phase range. The inverter loss tends to increase in a section in which an absolute value of the second command signal is high (i.e., a phase range not including the zero cross point) and to decrease in a section in which the absolute value of the second command signal is low (i.e., a phase range including the zero crossing point). Therefore, the inverter loss can be more effectively reduced by setting the section in which the carrier frequency is set to be low to the first phase range not including the zero cross point.

In some examples, the first phase range may be a phase range in which the absolute value of the second command signal is equal to or more than a reference value in one period of the second command signal. As described above, the inverter loss tends to increase in a section in which the absolute value of the second command signal is high and to decrease in a section in which the absolute value of the second command signal is low. Therefore, the inverter loss can be more effectively reduced by setting the section in which the carrier frequency is set to be low to the first phase range in which the absolute value of the second command signal is equal to or more than the reference value.

In some examples, the first phase range may be a phase range including a peak point at which the absolute value of the second command signal is maximum in one period of the second command signal. As described above, the inverter loss tends to increase in a section in which the absolute value of the second command signal is high and to decrease in a section in which the absolute value of the second command signal is low. Therefore, the inverter loss can be more effectively reduced by setting the section in which the carrier frequency is set to be low to the first phase range including the peak point.

In some examples, the first phase range may be a phase range not including the peak point at which the absolute value of the second command signal is maximum in one period of the second command signal. This setting also makes it possible to more effectively reduce the inverter loss.

In some examples, the motor device may further include a motor loss measurement unit that outputs a signal related to a motor loss generated in the electric motor, and an inverter loss measurement unit that outputs a signal related to an inverter loss generated in the inverter. The carrier frequency setting unit may set the first phase range on the basis of the signal related to the motor loss and the signal related to the inverter loss. In this case, the section in which the carrier frequency is set to be low can be determined in consideration of the motor loss and the inverter loss. In other words, a section corresponding to the first phase range in one period of the second command signal can be defined.

Hereinafter, an embodiment will be described with reference to the drawings. In the description of the drawings, the same elements or corresponding elements are denoted by the same reference numerals, and redundant description may be omitted.

### <Embodiment>

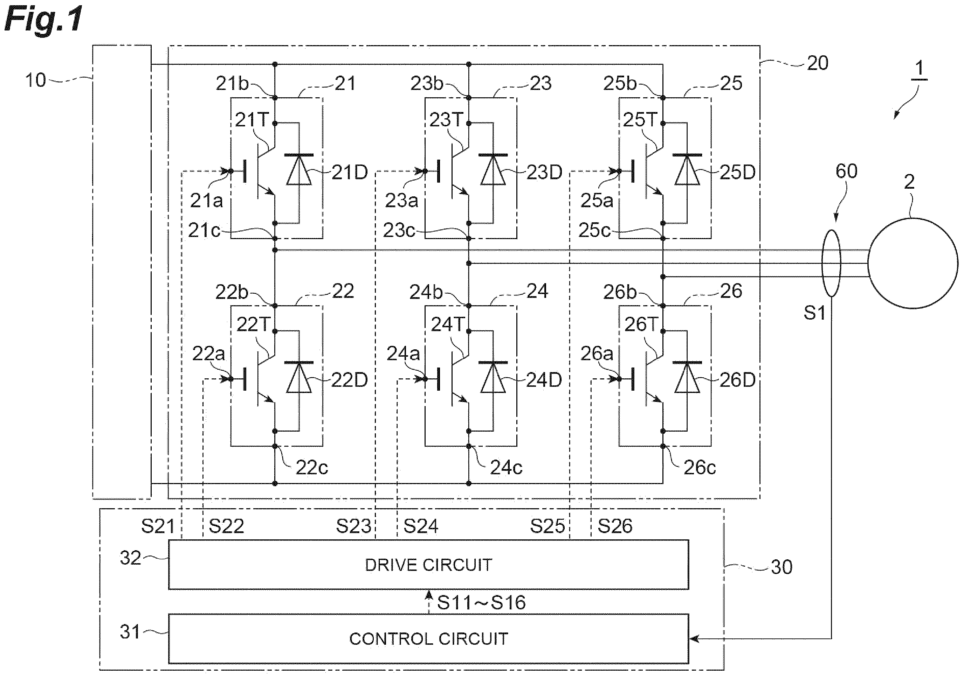

A motor device 1 illustrated in FIG. 1 includes an electric motor 2 (hereinafter, referred to as a motor 2), an inverter 20, and a controller 30. The motor device 1 receives electric power from a power source 10 and is driven. The motor 2 is, for example, a permanent magnet synchronous motor. The motor 2 may be an interior permanent magnet (IPM) motor or a surface permanent magnet (SPM) motor. AC power is supplied from the inverter 20 to the motor 2, and the motor 2 thereby rotates. Specifically, a stator of the motor 2 generates a rotating magnetic field in response to supply of the AC power, and a rotor of the motor 2 rotates in response to the rotating magnetic field.

DC power is supplied from the power source 10 to the inverter 20. The inverter 20 converts the supplied DC power into three-phase AC power, and supplies the converted three-phase AC power to the motor 2. The inverter 20 includes circuit blocks 21 and 22, circuit blocks 23 and 24, and circuit blocks 25 and 26 for each phase of the three-phase AC power. The circuit blocks 21 and 22 supply single-phase AC power to the motor 2 as U-phase AC power. The circuit blocks 23 and 24 supply the single-phase AC power to the motor 2 as V-phase AC power. The circuit blocks 25 and 26 supply the single-phase AC power to the motor 2 as W-phase AC power.

The circuit blocks 21 and 22 are connected in series to each other and connected in parallel to the power source 10. A terminal 21a of the circuit block 21 is connected to the controller 30. A terminal 21b of the circuit block 21 is connected to the power source 10 and the circuit blocks 23 and 25. A terminal 21c of the circuit block 21 is connected to the circuit block 22. The terminal 21c of the circuit block 21 is connected to the motor 2.

The circuit block 21 includes a transistor 21T and a diode 21D. A collector of the transistor 21T constitutes the terminal 21b of the circuit block 21. An emitter of the transistor 21T constitutes the terminal 21c of the circuit block 21. A gate of the transistor 21T constitutes the terminal 21a of the circuit block 21. The diode 21D has an input connected to a drain of the diode 21D and an output connected to a collector of the diode 21D so as to cause an electric current to flow from the emitter side to the collector side of the transistor 21T. The diode 21D is connected in parallel to the transistor 21T.

As described above, an electric current flows from the terminal 21b to the terminal 21c in a state where the transistor 21T is turned on in the circuit block 21. On the other hand, an electric current flows from the terminal 21c to the terminal 21b in a state where the transistor 21T is turned off.

A terminal 22a of the circuit block 22 is connected to the controller 30. A terminal 22b of the circuit block 22 is connected to the circuit block 21. The terminal 22b of the circuit block 22 is connected to the motor 2. A terminal 22c of the circuit block 22 is connected to the power source 10 and the circuit blocks 24 and 26. Similarly to the circuit block 21, the circuit block 22 also includes a transistor 22T and a diode 22D. The transistor 22T and the diode 22D have similar connection configurations to the transistor 21T and the diode 21D, respectively.

The circuit blocks 23 and 24 are connected in series to each other and connected in parallel to the power source 10. The circuit blocks 23 and 24 also have a similar connection configuration to the circuit blocks 21 and 22.

A terminal 23a of the circuit block 23 is connected to the controller 30. A terminal 23b of the circuit block 23 is connected to the power source 10 and the circuit blocks 21 and 25. A terminal 23c of the circuit block 23 is connected to the circuit block 24. The terminal 23c of the circuit block 23 is connected to the motor 2. Similarly to the circuit block 21, the circuit block 23 also includes a transistor 23T and a diode 23D. The transistor 23T and the diode 23D have similar connection configurations to the transistor 21T and the diode 21D, respectively.

A terminal 24a of the circuit block 24 is connected to the controller 30. A terminal 24b of the circuit block 24 is connected to the circuit block 23. The terminal 24b of the circuit block 24 is connected to the motor 2. A terminal 24c of the circuit block 24 is connected to the power source 10 and the circuit blocks 22 and 26. Similarly to the circuit block 21, the circuit block 24 also includes a transistor 24T and a diode 24D. The transistor 24T and the diode 24D have similar connection configurations to the transistor 21T and the diode 21D, respectively.

The circuit blocks 25 and 26 are connected in series to each other and connected in parallel to the power source 10. The circuit blocks 25 and 26 also have a similar connection configuration to the circuit blocks 21 and 22.

A terminal 25a of the circuit block 25 is connected to the controller 30. A terminal 25b of the circuit block 25 is connected to the power source 10 and the circuit blocks 21 and 23. A terminal 25c of the circuit block 25 is connected to the circuit block 26. The terminal 25c of the circuit block 25 is connected to the motor 2. Similarly to the circuit block 21, the circuit block 25 also includes a transistor 25T and a diode 25D. The transistor 25T and the diode 25D have similar connection configurations to the transistor 21T and the diode 21D, respectively.

A terminal 26a of the circuit block 26 is connected to the controller 30. A terminal 26b of the circuit block 26 is connected to the circuit block 25. The terminal 26b of the circuit block 26 is connected to the motor 2. A terminal 26c of the circuit block 26 is connected to the power source 10 and the circuit blocks 22 and 24. Similarly to the circuit block 21, the circuit block 26 also includes a transistor 26T and a diode 26D. The transistor 26T and the diode 26D have similar connection configurations to the transistor 21T and the diode 21D, respectively.

On/off of each of the circuit blocks 21 to 26 is switched according to control signals S21 to S26 from the controller 30. As a result, three-phase AC power is supplied from the inverter 20 to the motor 2. An electric current sensor 60 is disposed on a line present between the inverter 20 and the motor 2. The electric current sensor 60 detects an electric current of each phase of AC power output from the inverter 20 to the motor 2. That is, the electric current sensor 60 detects a U-phase electric current, a V-phase electric current, and a W-phase electric current. The electric current sensor 60 outputs an electric current signal S1 indicating an electric current of each phase to the controller 30. The electric current sensor 60 does not need to detect electric currents of all three phases of the U-phase, the V-phase, and the W-phase. For example, the electric current sensor 60 may detect electric currents of two phases among the U-phase, the V-phase, and the W-phase, and may acquire an electric current of the remaining one phase by calculation.

The controller 30 is an electronic control unit that controls the entire inverter 20. The controller 30 is constituted by a computer including, for example, a CPU, a ROM, and a RAM. The controller 30 includes, for example, a control circuit 31 and a drive circuit 32. The electric current signal S1 is input from the electric current sensor 60 to the control circuit 31. The control circuit 31 outputs control signals S11 to S16 for performing on/off driving on the circuit blocks 21 to 26, respectively to the drive circuit 32 on the basis of the electric current signal S1. The drive circuit 32 amplifies the control signals S11 to S16 output from the control circuit 31, and outputs the amplified control signals S21 to S26 to the corresponding circuit blocks 21 to 26, respectively.

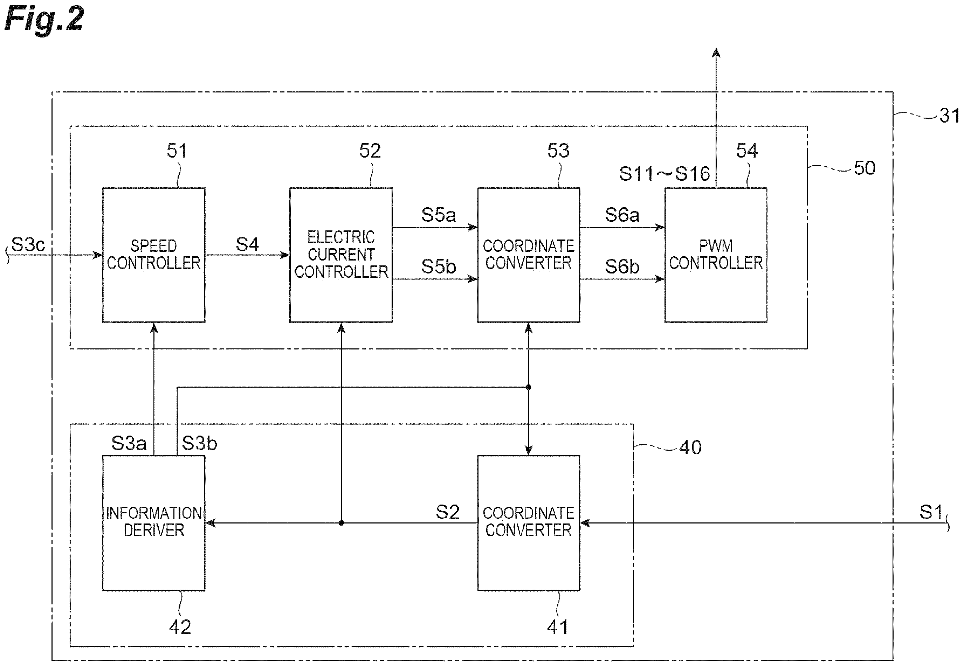

Hereinafter, the configuration of the control circuit 31 will be described in more detail with reference to FIG. 2. As illustrated in FIG. 2, the control circuit 31 includes, for example, an information detection unit 40 and a signal generation unit 50 as functional configurations. The signal generation unit 50 generates the control signals S11 to S16 to be provided to the circuit blocks 21 to 26 such that an angular velocity of motor 2 follows a target angular velocity. The information detection unit 40 outputs a signal necessary for control processing and the like in the signal generation unit 50. For example, the information detection unit 40 outputs signals S2, S3a, and S3b.

The information detection unit 40 includes, for example, a coordinate converter 41 and an information deriver 42.

The electric current signal S1 and the information signal S3b are input to the coordinate converter 41. The coordinate converter 41 generates the electric current signal S2 using the electric current signal S1 and the information signal S3b. The coordinate converter 41 generates the electric current signal S2 by coordinate-converting an electric current of each phase included in the electric current signal S1 using rotational position information. The coordinate converter 41 outputs the electric current signal S2 to the information deriver 42. Furthermore, the coordinate converter 41 outputs the electric current signal S2 to the signal generation unit 50.

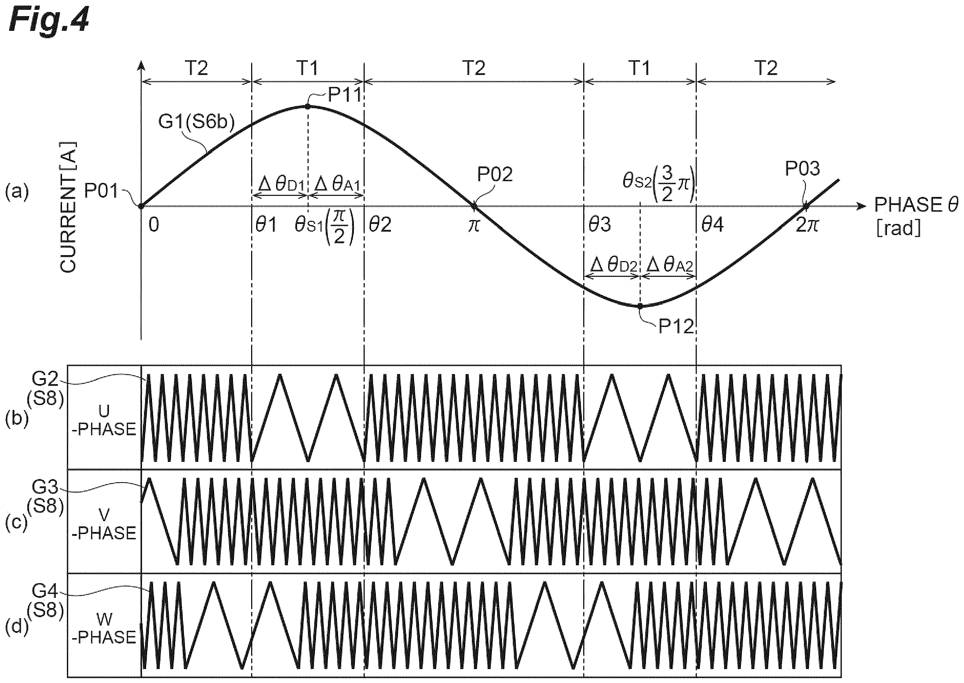

A dq coordinate system including a d-axis and a q-axis means a rotating coordinate system that rotates together with the rotor of the motor 2. The d-axis and the q-axis are orthogonal to each other, and both are orthogonal to a rotation axis of the motor 2. A d-axis electric current means an electric current in the d-axis direction. That is, the d-axis electric current means an electric current for generating a magnetic flux in the d-axis direction in the stator of the motor 2. A q-axis electric current means an electric current in the q-axis direction. That is, the q-axis electric current means an electric current for generating a magnetic flux in the q-axis direction in the stator of the motor 2. In the present embodiment, a case where a magnet of the rotor of the motor 2 is magnetized in two poles is exemplified, but the magnet may be magnetized in two or more poles (multipoles). For example, the magnet may be magnetized in four poles (two pairs of poles). When a two-pole magnet is used, a mechanical frequency and an electrical frequency have a one-to-one relationship. When a four-pole magnet is used, the electrical frequency is twice the mechanical frequency. In the present embodiment in which a two-pole magnet is used, a section of phase θ = 0 to 2π illustrated in (a) of FIG. 4 described later corresponds to one period of an electric current command. Meanwhile, when a four-pole magnet is used, a section of phase θ = 0 to π illustrated in (a) of FIG. 4 corresponds to one period of the electric current command.

The electric current signal S2 is input to the information deriver 42. The information deriver 42 generates the information signals S3a and S3b using the electric current signal S2. The information signal S3a indicates an angular velocity ω. The angular velocity ω represents an angular velocity of the rotor with respect to the stator of the motor 2. The information signal S3b indicates a phase θ. The phase θ represents a rotational position of the rotor with respect to the stator of the motor 2. The information deriver 42 derives the angular velocity ω and the phase θ of the motor 2 on the basis of the d-axis electric current and the q-axis electric current included in the electric current signal S2. The information deriver 42 outputs the information signal S3a and the information signal S3b to the signal generation unit 50. Furthermore, the information deriver 42 also outputs the information signal S3b to the coordinate converter 41.

The signal generation unit 50 includes, for example, a speed controller 51, an electric current controller 52, a coordinate converter 53, and a PWM controller 54.

The information signal S3a and a target signal S3c are input to the speed controller 51. The speed controller 51 generates an electric current command signal S4 using information signal S3a and the target signal S3c. The target signal S3c is, for example, a d-axis electric current command set by an operator's input. The electric current command signal S4 includes a q-axis electric current command and a d-axis electric current command. The q-axis electric current command is a command for reducing a deviation between the angular velocity ω of the motor 2 included in the information signal S3a and the target angular velocity ω. The target angular velocity ω is input from, for example, a higher-level controller. The speed controller 51 outputs the electric current command signal S4 to the electric current controller 52.

The electric current signal S2 and the electric current command signal S4 are input to the electric current controller 52. The electric current controller 52 generates a voltage command signal S5a and an electric current command signal S5b using the electric current signal S2 and the electric current command signal S4. The voltage command signal S5a includes a d-axis voltage command and a q-axis voltage command. The d-axis voltage means a voltage in the same direction as the d-axis electric current. The q-axis voltage means a voltage in the same direction as the q-axis electric current. The electric current command signal S5b indicates the same information as the electric current command signal S4. The electric current controller 52 generates the d-axis voltage command by performing calculation based on a deviation between the d-axis electric current command and the d-axis electric current. Similarly, the electric current controller 52 generates the q-axis voltage command by performing calculation based on a deviation between the q-axis electric current command and the q-axis electric current. The electric current controller 52 outputs the voltage command signal S5a and the electric current command signal S5b to the coordinate converter 53.

The information signal S3b, the voltage command signal S5a, and the electric current command signal S5b are input to the coordinate converter 53. The coordinate converter 53 generates a voltage command signal S6a (first command signal) and an electric current command signal S6b (second command signal) using the voltage command signal S5a and the electric current command signal S5b. The voltage command signal S6a indicates a U-phase voltage command, a V-phase voltage command, and a W-phase voltage command. The coordinate converter 53 generates a U-phase voltage command, a V-phase voltage command, and a W-phase voltage command by coordinate-converting the d-axis voltage command and the q-axis voltage command included in the voltage command signal S5a using rotational position information. The electric current command signal S6b indicates a U-phase electric current command, a V-phase electric current command, and a W-phase electric current command. The coordinate converter 53 generates a U-phase electric current command, a V-phase electric current command, and a W-phase electric current command by coordinate-converting the d-axis electric current command and the q-axis electric current command included in the electric current command signal S5b using rotational position information. The coordinate converter 53 outputs the voltage command signal S6a and the electric current command signal S6b to the PWM controller 54.

The voltage command signal S6a and the electric current command signal S6b are input to the PWM controller 54. The PWM controller 54 generates the control signals S11 to S16 using the voltage command signal S6a and the electric current command signal S6b. The control signals S11 to S16 are pulse signals for controlling the operation of the circuit blocks 21 to 26. The PWM controller 54 outputs the control signals S11 to S16 to the drive circuit 32 (see FIG. 1).

The drive circuit 32 generates the control signals S21 to S26 by amplifying the control signals S11 to S16. The drive circuit 32 outputs the control signals S21 to S26 to the corresponding circuit blocks 21 to 26.

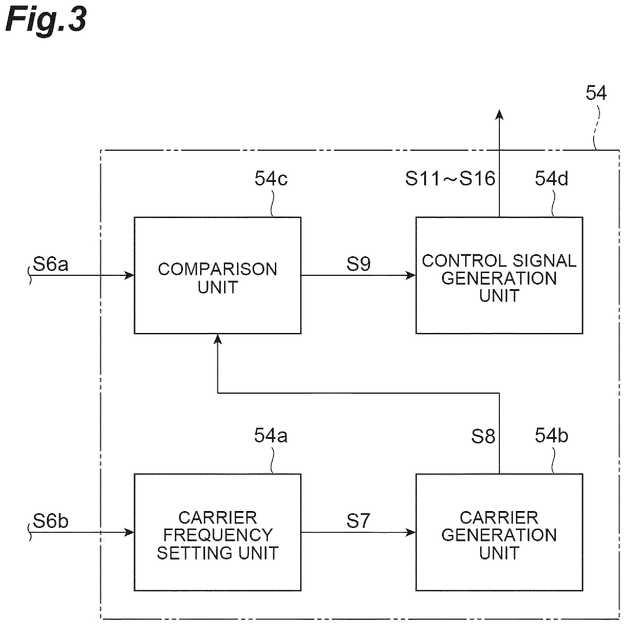

Next, a more detailed configuration of the PWM controller 54 will be described with reference to FIG. 3. As illustrated in FIG. 3, the PWM controller 54 includes, for example, a carrier frequency setting unit 54a, a carrier generation unit 54b, a comparison unit 54c, and a control signal generation unit 54d.

The electric current command signal S6b indicating an electric current command of each phase is input to the carrier frequency setting unit 54a. The carrier frequency setting unit 54a generates a frequency signal S7 on the basis of the electric current command signal S6b. The frequency signal S7 includes a carrier frequency related to a U-phase, a carrier frequency related to a V-phase, and a carrier frequency related to a W-phase. That is, the carrier frequency setting unit 54a sets the U-phase carrier frequency on the basis of the U-phase electric current command, sets the V-phase carrier frequency on the basis of the V-phase electric current command, and sets the W-phase carrier frequency on the basis of the W-phase electric current command. The carrier frequency setting unit 54a outputs the frequency signal S7 to the carrier generation unit 54b.

The frequency signal S7 is input to the carrier generation unit 54b. The carrier generation unit 54b generates a carrier S8 using the frequency signal S7. The carrier S8 includes a U-phase carrier, a V-phase carrier, and a W-phase carrier. That is, the carrier generation unit 54b generates a U-phase carrier, a V-phase carrier, and a W-phase carrier according to the frequency signal S7. The carrier S8 may be a triangular wave or a sawtooth wave. The carrier generation unit 54b outputs the carrier S8 to the comparison unit 54c.

The carrier S8 and the voltage command signal S6a are input to the comparison unit 54c. The comparison unit 54c generates an information signal S9 using the carrier S8 and the voltage command signal S6a. The information signal S9 is a pulse signal to be provided to the inverter 20. Specifically, the comparison unit 54c compares the magnitude of an amplitude of a voltage command of each phase included in the voltage command signal S6a with the magnitude of an amplitude of a carrier of each phase included in the carrier S8. The comparison unit 54c generates the information signal S9 necessary for generating the control signals S11 to S16 on the basis of the comparison result. The comparison unit 54c outputs the information signal S9 to the control signal generation unit 54d.

The control signal generation unit 54d generates the control signals S11 to S16 which are pulse signals on the basis of the information signal S9.

Here, an example of setting of a carrier frequency by the carrier frequency setting unit 54a will be described with reference to FIG. 4. (a) of FIG. 4 illustrates a U-phase electric current command G1. The vertical axis in (a) of FIG. 4 represents an electric current value [A] of the electric current command G1, and the horizontal axis in (a) of FIG. 4 represents a phase θ [rad] of the U-phase electric current command, (b) of FIG. 4 illustrates a U-phase carrier G2. The horizontal axis in (b) of FIG. 4 corresponds to the horizontal axis in (a) of FIG. 4.

(c) of FIG. 4 illustrates a V-phase carrier G3. (d) of FIG. 4 illustrates a W-phase carrier G4. Similarly to the horizontal axis in (b) of FIG. 4, the horizontal axes in (c) and (d) of FIG. 4 correspond to the horizontal axis in (a) of FIG. 4. Hereinafter, an example of setting a carrier frequency of the U-phase carrier G2 will be described focusing on a relationship between the electric current command G1 and the U-phase carrier G2.

Setting of a carrier frequency of the V-phase carrier G3 and setting of a carrier frequency of the W-phase carrier G4 are performed similarly to setting of a carrier frequency of the U-phase carrier G2. Therefore, description of these settings is omitted.

The carrier frequency setting unit 54a switches the carrier frequency of the carrier G2 for each predetermined section while referring to the electric current command G1. Specifically, the carrier frequency setting unit 54a sets a section T1 and a section T2 in one period of the electric current command G1. Then, the carrier frequency setting unit 54a makes a carrier frequency (f1) in the section T1 and a carrier frequency (f2) in the section T2 different from each other.

The section T1 is a first phase range in one period of the electric current command G1. The "first phase range" is, for example, a phase range not including zero cross points P01, P02, and P03 at which positive and negative of an electric current value of the electric current command G1 are inverted in one period of the electric current command G1. The "first phase range" may be a phase range not including the zero cross points P01, P02, and P03 and including peak points P11 and P12 at which an absolute value of an electric current value of the electric current command G1 is maximum in one period of the electric current command G1.

At the zero cross point P01, the phase θ of the electric current command G1 is 0 [rad]. At the zero cross point P02, the phase θ of the electric current command G1 is π [rad]. At the zero cross point P03, the phase θ of the electric current command G1 is 2π [rad]. At each of the zero cross points P01, P02, and P03, the electric current value of the electric current command G1 is zero. When the phase θ of the electric current command G1 is π/2 [rad], the electric current value of the electric current command G1 is maximal (peak point P11). When the phase θ of the electric current command G1 is 3π/2 [rad], the electric current value of the electric current command G1 is minimal (peak point P12).

Therefore, the "first phase range" includes a phase range located between the zero cross point P01 and the zero cross point P02 and including the peak point P11, and a phase range located between the zero cross point P02 and the zero cross point P03 and including the peak point P12. Neither of these phase ranges includes the zero cross points P01, P02, and P03. Hereinafter, each of these phase ranges may be replaced with a "section T1" for description.

The section T1 can be defined by, for example, a reference phase θ_{S1}, and phase differences Δθ_{D1} and Δ_{θA1} based on the reference phase θ_{S1}. The section T1 may be, for example, a range from a start phase θ1 delayed by the phase difference Δθ_{D1} with respect to the reference phase θ_{S1} to an end phase θ2 advanced by the phase difference Δθ_{A1} with respect to the reference phase θ_{S1}. The reference phase θ_{S1} is set in a range more than 0 [rad] and less than π [rad] (0 < θ < π). For example, as illustrated in (a) of FIG. 4, the reference phase θ_{S1} may be a phase θ (π/2 [rad]) indicating the peak point P11. When π/2 [rad] is set as the reference phase θ_{S1}, each of the phase differences Δθ_{D1} and θ_{A1} is set in a range of 0 [rad] or more and less than π/2 [rad]. In the example of (a) of FIG. 4, the phase difference Δθ_{D1} on a side where the phase θ is delayed and the phase difference Δθ_{A1} on a side where the phase θ is advanced are set to the same value. The phase difference Δθ_{D1} on the side where the phase θ is delayed and the phase difference Δθ_{A1} on the side where the phase θ is advanced may be different from each other.

The section T1 is set in a range where the phase θ is more than 0 [rad] and less than π [rad] (0 < θ < π). Furthermore, the section T1 is set in a range where the phase θ is more than π [rad] and less than 2π [rad] (π < θ < 2π). The section T1 set in a range where the phase θ is more than π [rad] and less than 2π [rad] can be defined by, for example, a reference phase θ_{S2}, and phase differences Δθ_{D2} and Δθ_{A2} based on the reference phase θ_{S2}. The section T1 may be, for example, a range from a start phase θ3 delayed by the phase difference Δθ_{D2} with respect to the reference phase θ_{S2} to an end phase θ4 advanced by the phase difference Δθ_{A2} with respect to the reference phase θ_{S2}. The reference phase θ_{S2} is set in a range more than π [rad] and less than 2π [rad] (π < θ < 2π). For example, as illustrated in (a) of FIG. 4, the reference phase θ_{S2} may be a phase θ (3π/2 [rad]) indicating the peak point P12. Similarly to the phase differences Δθ_{D1} and Δθ_{A1}, the phase differences Δθ_{D2} and Δθ_{A2} may be equal to each other (Δθ_{D2} = Δθ_{A2}) or may be different from each other (Δθ_{D2} ≠ Δθ_{A2}).

On the other hand, the section T2 corresponds to a "second phase range" other than the "first phase range" in one period of the electric current command G1. The "second phase range" is the entire phase range other than the "first phase range" in one period of the electric current command G1. Therefore, the "second phase range" includes a phase range in which the phase θ is from 0 [rad] to θ1 [rad], a phase range in which the phase θ is from θ2 [rad] to θ3 [rad], and a phase range in which the phase θ is from θ4 [rad] to 2π [rad]. These phase ranges include the zero cross points P01, P02, and P03, respectively. Hereinafter, each of these phase ranges may be replaced with a "section T2" for description.

Therefore, a section T2 including the zero cross point P01, a section T1 including the peak point P11, a section T2 including the zero cross point P02, a section T1 including the peak point P12, and a section T2 including the zero cross point P03 are arranged in this order in one period of the electric current command G1. It can also be said that the section T2 and the section T1 are arranged so as to be alternately repeated in one period of the electric current command G1.

The carrier frequency setting unit 54a sets the carrier frequency (f1) in the section T1 and the carrier frequency (f2) in the section T2. The carrier frequency (f2) is a frequency that prioritizes reduction of a motor loss generated in the motor 2. In a conventional motor device, carrier frequencies are equally set to the carrier frequency (f2) in all sections. On the other hand, the carrier frequency setting unit 54a sets the carrier frequency (f1) in the section T1 to be lower than the carrier frequency (f2) in the section T2. The carrier frequency (f1) is a frequency that prioritizes reduction of an inverter loss generated in the inverter 20. As described above, while the carrier frequency (f2) of the carrier G2 is set to a high frequency in the section T2, the carrier frequency (f1) of the carrier G2 is set to a low frequency in the section T1.

The carrier frequency setting unit 54a sets a carrier frequency of the V-phase carrier G3 and a carrier frequency of the W-phase carrier G4 similarly to the carrier frequency of the U-phase carrier G2. Note that the U-phase electric current command G1 is shifted by 2π/3 [rad] from the V-phase electric current command, and the V-phase electric current command is shifted by 2π/3 [rad] from the W-phase electric current command. Therefore, as illustrated in (b), (c), and (d) of FIG. 4, a section in which the carrier frequency of the V-phase carrier G3 is set to a low frequency and a section in which the carrier frequency of the W-phase carrier G4 is set to a low frequency are each shifted from the section T1 in which the carrier frequency (f1) of the U-phase carrier G2 is set to a low frequency. In the section in which the carrier frequency of the V-phase carrier G3 is set to a low frequency and the section in which the carrier frequency of the W-phase carrier G4 is set to a low frequency, these carrier frequencies may be the same as the carrier frequency (f1) of the U-phase carrier G2 or may be different from the carrier frequency (f1).

### <Operation and Effect>

Next, operation and effect achieved by the motor device 1 according to the present embodiment will be described. In the motor device 1 according to the present embodiment, the carrier frequency (f1) of the carrier G2 in the section T1 is set to be lower than the carrier frequency (f2) of the carrier G2 in the section T2. That is, the high carrier frequency (f2) is not set in the entire section (i.e., all the sections including the sections T1 and T2) of one period of the electric current command G1, but the low carrier frequency (f1) is set only in the section T1 which is a part of one period of the electric current command G1. In the section T1 in which the low carrier frequency (f1) is set, an inverter loss is suppressed to be smaller than that in the section T2 in which the high carrier frequency (f2) is set.

The inverter loss is a loss generated by an electromagnetic factor in the inverter 20. Examples of a factor of increasing the inverter loss include an increase in switching loss. The switching loss also increases as a carrier frequency of a carrier increases. This is because when the carrier frequency of the carrier increases, the number of switching operations of the circuit blocks 21 to 26 increases, and a switching loss thereby increases. Since the switching loss is generated when the circuit blocks 21 to 26 transition from on to off, the total switching loss also increases as the number of switching operations of the circuit blocks 21 to 26 increases. In this manner, the inverter loss increases as the carrier frequency of the carrier increases. In other words, the inverter loss decreases as the carrier frequency of the carrier decreases.

As a frequency characteristic of electric resistance of the stator included in the motor 2, in general, a resistance value rapidly increases as a frequency of drive electric power increases. This is caused by a proximity effect, a skin effect, and the like. For example, the resistance value may rapidly increase in a frequency region after 10 kHz. Therefore, in a frequency characteristic of a motor electric current, the loss can be reduced by reducing a high-frequency component.

Therefore, when the low carrier frequency (f1) is set only in the section T1 which is a part of one period of the electric current command G1, a total switching loss in one period of the electric current command G1 can be reduced as compared with a case where the high carrier frequency (f2) is set in the entire section of one period of the electric current command G1. This makes it possible to reduce the inverter loss. The same applies to the carrier frequency of the V-phase carrier G3 and the carrier frequency of the W-phase carrier G4. As a result, a decrease in output efficiency of the motor 2 can be suppressed.

Furthermore, when the low carrier frequency (f1) is set only in the section T1 which is a part of one period of the electric current command G1, an increase in motor loss can be suppressed as compared with a case where the low carrier frequency (f1) is set in the entire section of one period of the electric current command G1. The motor loss is a loss generated by an electromagnetic factor in the motor 2, and is, for example, an iron loss or a copper loss. Examples of a factor of increasing the motor loss include an increase in electric current ripple component. The electric current ripple component increases as a carrier frequency of a carrier increases. When the electric current ripple component increases, it is difficult to bring an electric current command close to an ideal sinusoidal shape, and therefore the motor loss increases. Therefore, the motor loss increases as the carrier frequency decreases.

Therefore, when the low carrier frequency (f1) is set in the entire section of one period of the electric current command G1, the motor loss increases, and as a result, output efficiency of the motor 2 may decrease. That is, when the low carrier frequency (f1) is set in the entire section of one period of the electric current command G1, an increase in inverter loss is suppressed, while the motor loss increases. Conversely, when the high carrier frequency (f2) is set in the entire section of one period of the electric current command G1, an increase in motor loss is suppressed, while the inverter loss increases. Meanwhile, when the low carrier frequency (f1) is set only in the section T1 which is a part of one period of the electric current command G1 as in the motor device 1, it is possible to reduce the inverter loss while suppressing the increase in motor loss. As a result, it is possible to suitably suppress a decrease in output efficiency of the motor 2.

In the present embodiment, the "first phase range" may be a phase range not including the zero cross points P01, P02, and P03 at which positive and negative of an electric current value of the electric current command G1 are inverted in one period of the electric current command G1. The inverter loss tends to increase in a section in which an absolute value of an electric current value of the electric current command G1 is high (i.e., the section T1 not including the zero cross points P01, P02, and P03) and to decrease in a section in which the absolute value of the electric current value of the electric current command G1 is low (i.e., the section T2 including the zero cross points P01, P02, and P03). This is because a switching loss generated in one switching operation increases as the absolute value of the electric current value of the electric current command G1 increases. When the circuit blocks 21 to 26 transition from on to off, a voltage and an electric current flowing through the circuit blocks 21 to 26 are not instantaneously switched, and a section in which the voltage and the electric current overlap with each other is generated. As a result, a switching loss indicated by a product of the voltage and the electric current is generated.

Therefore, a switching loss generated in one switching operation increases as the absolute value of the electric current value of the electric current command G1 increases. Therefore, when a section in which the carrier frequency is set to be low is set to the section T1 not including the zero cross points P01, P02, and P03, the number of switching operations can be reduced, and therefore an increase in the total switching loss can be suppressed. As a result, the inverter loss can be more effectively reduced than that in a case where the section in which the carrier frequency is set to be low is set to the section T2 including the zero cross points P01, P02, and P03.

In the present embodiment, the "first phase range" may be a phase range including the peak points P11 and P12 at which the absolute value of the electric current value of the electric current command G1 is maximum in one period of the electric current command G1. The absolute value of the electric current value of the electric current command G1 is maximum at the peak points P11 and P12. Therefore, in sections near the peak points P11 and P12, a switching loss generated in one switching operation is extremely large. Therefore, an increase in the total switching loss can be effectively suppressed by setting the section in which the carrier frequency is set to be low to the section T1 including the peak points P11 and P12. As a result, the inverter loss can be more effectively reduced than that in a case where the section in which the carrier frequency is set to be low is set to the section T2 not including the peak points P11 and P12.

The present disclosure is not limited to the above-described embodiment, and various other modifications are possible.

### <Modification 1>

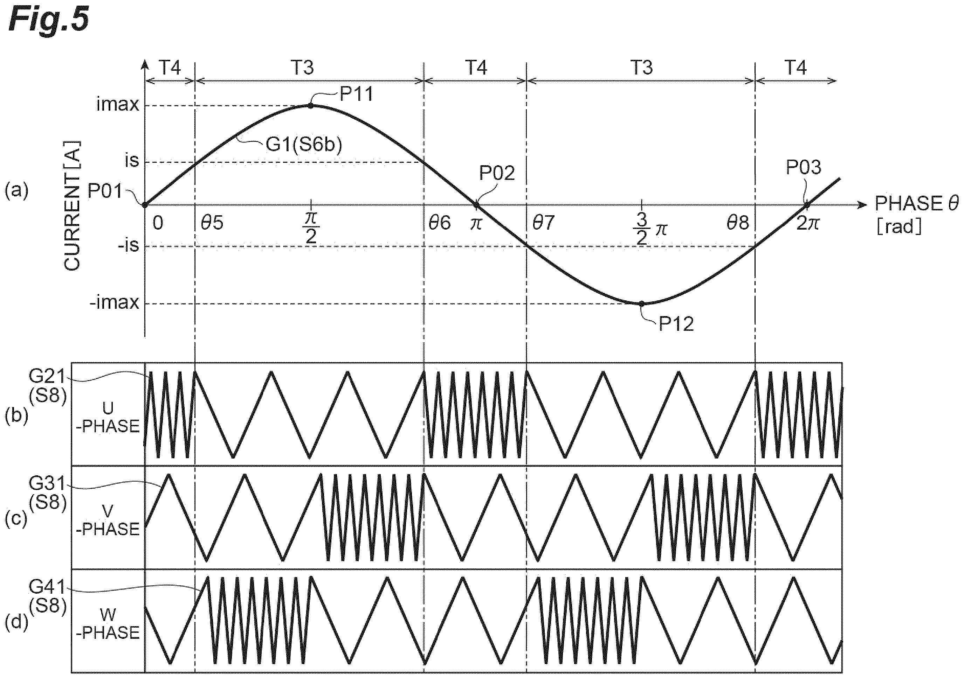

FIG. 5 illustrates another example of the setting of the carrier frequency by the carrier frequency setting unit 54a. (a) of FIG. 5 illustrates the U-phase electric current command G1. (b) of FIG. 5 illustrates a U-phase carrier G21. (c) of FIG. 5 illustrates a V-phase carrier G31. (d) of FIG. 5 illustrates a W-phase carrier G41. Hereinafter, as in the above-described embodiment, an example of setting a carrier frequency of the carrier G21 will be described focusing on a relationship between the U-phase electric current command G1 and the U-phase carrier G21. In the example illustrated in FIG. 5, the carrier frequency setting unit 54a sets a "first phase range" in one period of the electric current command G1 to a phase range in which an absolute value of an electric current value of the electric current command G1 is equal to or more than a "reference value is".

The "reference value is" is a value more than 0. At each of the zero cross points P01, P02, and P03, the absolute value of the electric current value of the electric current command G1 is zero. At the peak points P11 and P12, the absolute value of the electric current command G1 is necessarily more than zero. Therefore, the phase range in which the absolute value of the electric current command G1 is equal to or more than the "reference value is" can be rephrased as a phase range not including the zero cross points P01, P02, and P03 and including the peak points P11 and P12 in one period of the electric current command G1. That is, the phase range in which the absolute value of the electric current value of the electric current command G1 is equal to or more than the "reference value is" includes a phase range located between the zero cross point P01 and the zero cross point P02 and including the peak point P11, and a phase range located between the zero cross point P02 and the zero cross point P03 and including the peak point P12. These phase ranges each correspond to a "section T3" in (a) of FIG. 5. Hereinafter, each of these phase ranges may be replaced with the "section T3" for description.

The section T3 located between the zero cross point P01 and the zero cross point P02 is a phase range located between two phases of 05 [rad] and θ6 [rad] corresponding to the positive "reference value is" of the electric current value of the electric current command G1. That is, this section T3 is a phase range in which the phase θ is θ5 [rad] or more and θ6 [rad] or less and is a phase range including the peak point P11. The section T3 located between the zero cross point P02 and the zero cross point P03 is a phase range located between two phases of θ7 [rad] and θ8 [rad] corresponding to the negative electric current value -is of the electric current command G1. That is, this section T3 is a phase range in which the phase θ is θ7 [rad] or more and θ8 [rad] or less and is a phase range including the peak point P12. In the example illustrated in (a) of FIG. 5, the "reference value is" is set to a half (1/2) of a maximum value of the absolute value of the electric current value of the electric current command G1. That is, the positive "reference value is" is set to a half of a maximal value imax of the electric current value of the electric current command G1, and the negative "reference value -is" is set to a half of a minimal value -imax of the electric current value of the electric current command G1.

The "reference value is" does not have to be set to a half of the maximum value of the absolute value of the electric current value of the electric current command G1, and can be appropriately changed. The "reference value is" may be 2/3 or 3/4 of the maximum value of the absolute value of the electric current value of the electric current command G1. The positive reference value and the negative reference value may be set to different values. In this case, the section T3 located between the zero cross point P01 and the zero cross point P02 and the section T3 located between the zero cross point P02 and the zero cross point P03 are different from each other according to the difference between the reference values.

On the other hand, a "second phase range" other than the phase range in which the absolute value of the electric current value of the electric current command G1 is equal to or more than the "reference value is" in one period of the electric current command G1 corresponds to a "section T4" in (a) of FIG. 5. The "second phase range" is the entire phase range other than the "first phase range" in one period of the electric current command G1, that is, a phase range in which the absolute value of the electric current value of the electric current command G1 is less than the "reference value is". The phase range in which the absolute value of the electric current value of the electric current command G1 is less than the "reference value is" includes a phase range in which the phase θ is 0 [rad] or more and less than 05 [rad], a phase range in which the phase θ is more than θ6 [rad] and less than θ7 [rad], and a phase range in which the phase θ is more than θ8 [rad] and 2π [rad] or less. These phase ranges include the zero cross points P01, P02, and P03, respectively.

As in the above-described embodiment, the carrier frequency setting unit 54a sets the carrier frequency (f1) of the carrier G21 in the section T3 to be lower than the carrier frequency (f2) of the carrier G21 in the section T4. Therefore, in the section T3 in which the absolute value of the electric current value of the electric current command G1 is equal to or more than the "reference value is", the carrier frequency of the carrier G21 is set to be lower than that in the section T4 in which the absolute value of the electric current value of the electric current command G1 is less than the "reference value is". Therefore, in the section T3, the number of switching operations of the circuit blocks 21 to 26 is smaller than that in the section T4.

As described above, a switching loss generated in one switching operation increases as the absolute value of the electric current value of the electric current command G1 increases. Therefore, when a section in which the carrier frequency is set to be low is set to the section T3 in which the absolute value of the electric current value of the electric current command G1 is equal to or more than the "reference value is", the number of switching operations can be reduced, and therefore an increase in total switching loss can be suppressed. In this case, an inverter loss can be more effectively reduced than that in a case where the section in which the carrier frequency is set to be low is set to the section T4 in which the absolute value of the electric current value of the electric current command G1 is less than the "reference value is".

In the example illustrated in (a) of FIG. 5, the "reference value is" is set to a half of a maximum value at which the absolute value of the electric current value of the electric current command G1 is maximum. As described above, in the section T3 in which the absolute value of the electric current value of the electric current command G1 is equal to or more than the "reference value is", a switching loss generated in one switching operation is relatively large. Therefore, in the section T3, by setting the carrier frequency to be low so as to reduce the number of switching operations, the total switching loss can be more effectively reduced. This makes it possible to more effectively reduce the inverter loss. Similar effects to those of the example illustrated in FIG. 5 can be obtained by setting the carrier frequency of the V-phase carrier G31 and the carrier frequency of the W-phase carrier G41 similarly to the above-described carrier frequency of the U-phase carrier G21.

In the example illustrated in FIG. 5, the section T4 in which the carrier frequency of the carrier G21 is set to be high is shorter than the section T2 in which the carrier frequency of the carrier G2 is set to be high in the embodiment illustrated in FIG. 4. Therefore, in the example illustrated in FIG. 5, it is also conceivable that a motor loss relatively increases. However, as illustrated in FIG. 5, the section T3 in which the carrier frequency of the U-phase carrier G21 is set to be high overlaps with a section in which the frequency of the V-phase carrier G31 is high and a section in which the frequency of the W-phase carrier G41 is high. As described above, even in a section in which a frequency of a carrier of a certain phase is set to be low, an increase in motor loss can be suppressed as long as the section overlaps with a section in which a frequency of a carrier of another phase is set to be high.

For example, it is assumed that an electric current path of the inverter 20 is a path passing through the U-phase circuit block 21 and the W-phase circuit block 26 in FIG. 1. In this case, in the section T3 in which the frequency of the U-phase carrier G21 is set to be low, a speed of on/off driving of the U-phase circuit block 21 is low. However, as illustrated in FIG. 5, the section T3 overlaps with a section in which the carrier frequency is set to be high in the W-phase carrier G41. In this section, a speed of on/off driving of the W-phase circuit block 26 is high. As described above, when a circuit block of any phase on the electric current path of the inverter 20 is driven at a high speed, a change amount of an electric current flowing through the electric current path can be reduced, and therefore an electric current ripple component can be reduced. Therefore, an increase in motor loss is effectively suppressed in the example illustrated in FIG. 5.

### <Modification 2>

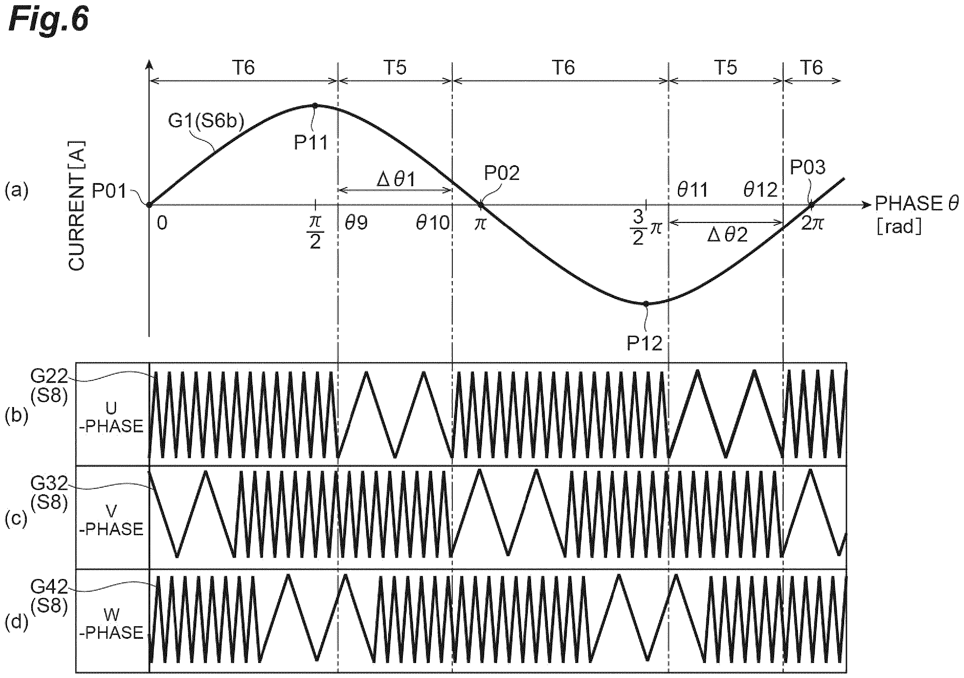

FIG. 6 illustrates still another example of the setting of the carrier frequency by the carrier frequency setting unit 54a. (a) of FIG. 6 illustrates the U-phase electric current command G1. (b) of FIG. 6 illustrates a U-phase carrier G22. (c) of FIG. 6 illustrates a V-phase carrier G32. (d) of FIG. 6 illustrates a W-phase carrier G42. Hereinafter, as in the above-described embodiment, an example of setting a carrier frequency of the U-phase carrier G22 will be described focusing on a relationship between the U-phase electric current command G1 and the U-phase carrier G22.

In the example illustrated in FIG. 6, the carrier frequency setting unit 54a sets a "first phase range" in one period of the electric current command G1 to a phase range not including the zero cross points P01, P02, and P03 and not including the peak points P11 and P12. That is, the "first phase range" in one period of the electric current command G1 includes a phase range located between the peak point P11 and the zero cross point P02 and a phase range located between the peak point P12 and the zero cross point P03. These phase ranges each correspond to a "section T5" in FIG. 5. Hereinafter, each of these phase ranges may be replaced with the "section T5" for description.

The section T5 located between the peak point P11 and the zero cross point P02 is a phase range in which the phase θ is from Θ9 [rad] to Θ10 [rad]. Θ9 is more than π/2 [rad] and less than π [rad]. Θ10 is more than Θ9 [rad] and less than π [rad]. A phase difference Δθ1 from Θ9 to Θ10 is more than 0 [rad] and less than π/2 [rad]. The section T5 may be defined by θ9 and θ10, or may be defined by Θ9 and the phase difference Δθ1. The section T5 located between the peak point P12 and the zero cross point P03 is a phase range in which the phase θ is from θ11 [rad] to θ12 [rad]. θ11 is more than π/2 [rad] and less than π [rad]. θ12 is more than θ11 [rad] and less than π [rad]. A phase difference Δθ2 from θ11 to θ12 is more than 0 [rad] and less than π/2 [rad]. The section T5 may be defined by θ11 and θ12, or may be defined by θ11 and the phase difference Δθ2. The phase differences Δθ1 and Δθ2 may be equal to each other (Δθ1 = Δθ2) or may be different from each other (Δθ1 ≠ Δθ2).

On the other hand, a second phase range other than the "first phase range" in one period of the electric current command G1 corresponds to a "section T6" in FIG. 6. The "second phase range" includes a phase range in which the phase θ is 0 [rad] or more and less than Θ9 [rad], a phase range in which the phase θ is more than Θ10 [rad] and less than θ11 [rad], and a phase range in which the phase θ is more than θ12 [rad] and 2π [rad] or less. These phase ranges include the zero cross points P01, P02, and P03, respectively. Among these phase ranges, a phase range including the zero cross point P01 includes the peak point P11. A phase range including the zero cross point P02 includes the peak point P12.

As in the above-described embodiment, the carrier frequency setting unit 54a sets the carrier frequency (f1) of the carrier G22 in the section T5 to be lower than the carrier frequency (f2) of the carrier G22 in the section T6. Even in such a form, similar effects to those of the above-described embodiment can be obtained. Similar effects to those of the example illustrated in FIG. 6 can be obtained by setting the carrier frequency of the V-phase carrier G32 and the carrier frequency of the W-phase carrier G42 similarly to the above-described carrier frequency of the U-phase carrier G22.

### <Modification 3>

The configuration of the motor device 1 is not limited to the above-described embodiment, and can be appropriately changed.

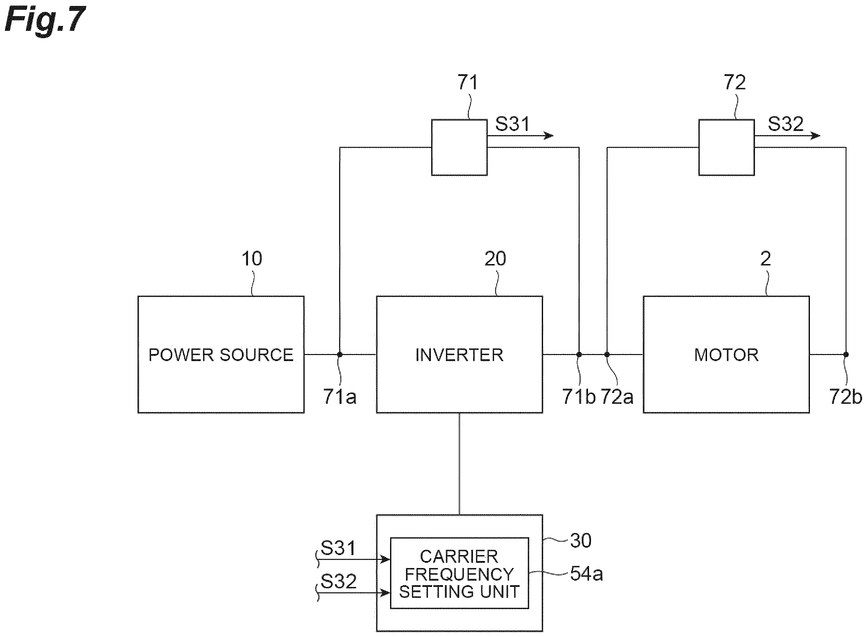

For example, the motor device 1 may further include an inverter loss measurement unit 71 and a motor loss measurement unit 72 as illustrated in FIG. 7. One end 71a of the inverter loss measurement unit 71 is connected to a line connecting the power source 10 and the inverter 20. Another end 71b of the inverter loss measurement unit 71 is connected to a line connecting the inverter 20 and the motor 2. The inverter loss measurement unit 71 measures an inverter loss by measuring a difference between energy input to the inverter 20 and energy output from the inverter 20. The inverter loss measurement unit 71 outputs an information signal S31 indicating the measured inverter loss to the controller 30. One end 72a of the motor loss measurement unit 72 is connected to a line connecting the inverter 20 and the motor 2. Another end 72b of the motor loss measurement unit 72 is connected to an output of the motor 2. The motor loss measurement unit 72 measures a motor loss by measuring a difference between energy input to the motor 2 and energy output from the motor 2. The motor loss measurement unit 72 outputs an information signal S32 indicating the measured motor loss to the controller 30.

The information signals S31 and S32 are input to the carrier frequency setting unit 54a of the controller 30. The carrier frequency setting unit 54a sets a phase condition using the inverter loss and the motor loss included in the information signals S31 and S32. The "phase condition" includes the reference phases θ_{S1} and θ_{S2} serving as a reference for defining the section T1, the phase differences Δθ_{D1} and Δθ_{A1} from the reference phase θ_{S1}, and the phase differences Δθ_{D1} and Δθ_{A1} from the reference phase θ_{S2} (see FIG. 4).

The carrier frequency setting unit 54a determines a phase condition for determining a range of the section T1, for example, such that the total loss of the inverter loss and the motor loss is minimum. As described above, the switching loss increases as the carrier frequency increases, and the switching loss decreases as the carrier frequency decreases. Therefore, in consideration of a balance between the motor loss and the inverter loss, the section T1 in which the carrier frequency is set to be low is set such that the total loss of these is minimum. As a result, it is possible to more reliably obtain an effect of reducing the inverter loss while suppressing an increase in motor loss. As a result, output efficiency of the motor 2 can be more reliably reduced.

### <Other Modifications>

In the above-described embodiment, the example in which the section T1 and the section T2 are set in one period of the electric current command G1 has been described. Another section may be set in addition to the section T1 and the section T2 in one period of the electric current command G1. In this case, a carrier frequency in the other section may be set to be higher than the carrier frequency (f1) in the section T1. The carrier frequency in the other section may be set to be higher or lower than the carrier frequency (f2) in the section T2.

In the above-described embodiment, the example in which two sections T1 are set in one period of the electric current command G1 has been described. For example, only one section T1 may be set in one period of the electric current command G1. In the above-described embodiment, the example in which the "first command signal" indicates the voltage command signal S6a and the "second command signal" indicates the electric current command signal S6b has been described. The "first command signal" and the "second command signal" may indicate the same information.

### [Supplementary Notes]

The present disclosure includes the following configurations.

The motor device of the present disclosure is [1] "a motor device including: an electric motor driven by AC drive electric power; an inverter that supplies the drive electric power to the electric motor; and a controller that generates a pulse signal for controlling the drive electric power using a first command signal indicating a target of the drive electric power and a carrier, in which the controller includes: a carrier frequency setting unit that sets a carrier frequency of the carrier using a second command signal indicating the target of the drive electric power, and the carrier frequency setting unit sets the carrier frequency in a section corresponding to a first phase range in one period of the second command signal to be lower than the carrier frequency in a section corresponding to a second phase range other than the first phase range."

The motor device of the present disclosure is [2] "the motor device according to [1], in which the first phase range is a phase range not including a zero cross point at which positive and negative of the second command signal are inverted in one period of the second command signal."

The motor device of the present disclosure is [3] "the motor device according to [2], in which the first phase range is a phase range in which an absolute value of the second command signal is equal to or more than a reference value in one period of the second command signal."

The motor device of the present disclosure is [4] "the motor device according to [3], in which the first phase range is a phase range including a peak point at which the absolute value of the second command signal is maximum in one period of the second command signal."

The motor device of the present disclosure is [5] "the motor device according to [3], in which the first phase range is a phase range not including a peak point at which the absolute value of the second command signal is maximum in one period of the second command signal."

The motor device of the present disclosure is [6] "the motor device according to any one of [1] to [5], further including: a motor loss measurement unit that outputs a signal related to a motor loss generated in the motor; and an inverter loss measurement unit that outputs a signal related to an inverter loss generated in the inverter, in which the carrier frequency setting unit sets the first phase range on a basis of the signal related to the motor loss and the signal related to the inverter loss."

### Reference Signs List

- 1: Motor device

- 2: Electric motor
- 20: Inverter
- 30: Controller
- 54a: Carrier frequency setting unit
- 71: Inverter loss measurement unit
- 72: Motor loss measurement unit
- is: Reference value
- P01, P02, P03: Zero cross point
- P11, P12: Peak point
- S6a: Voltage command signal (first command signal)
- S6b: Electric current command signal (second command signal)
- S11 to S16: Control signal (pulse signal)
- T1 to T6: Section

## Claims

1. A motor device comprising:
an electric motor driven by AC drive electric power;
an inverter that supplies the drive electric power to the electric motor; and
a controller that generates a pulse signal for controlling the drive electric power using a first command signal indicating a target of the drive electric power and a carrier, wherein
the controller includes:
a carrier frequency setting unit that sets a carrier frequency of the carrier using a second command signal indicating the target of the drive electric power, and
the carrier frequency setting unit sets the carrier frequency in a section corresponding to a first phase range in one period of the second command signal to be lower than the carrier frequency in a section corresponding to a second phase range other than the first phase range.

2. The motor device according to claim 1, wherein the first phase range is a phase range not including a zero cross point at which positive and negative of the second command signal are inverted in one period of the second command signal.

3. The motor device according to claim 2, wherein the first phase range is a phase range in which an absolute value of the second command signal is equal to or more than a reference value in one period of the second command signal.

4. The motor device according to claim 3, wherein the first phase range is a phase range including a peak point at which the absolute value of the second command signal is maximum in one period of the second command signal.

5. The motor device according to claim 3, wherein the first phase range is a phase range not including a peak point at which the absolute value of the second command signal is maximum in one period of the second command signal.

6. The motor device according to claim 1, further comprising:
a motor loss measurement unit that outputs a signal related to a motor loss generated in the electric motor; and
an inverter loss measurement unit that outputs a signal related to an inverter loss generated in the inverter, wherein
the carrier frequency setting unit sets the first phase range on a basis of the signal related to the motor loss and the signal related to the inverter loss.
